(19) Europäisches Patentamt
European Patent Office
Office européen des brevets

(11) **EP 2 315 144 A1**

(12) **DEMANDE DE BREVET EUROPEEN**

(43) Date de publication:
**27.04.2011 Bulletin 2011/17**

(51) Int Cl.:
***G06F 17/50*** *(2006.01)*

(21) Numéro de dépôt: **10290498.4**

(22) Date de dépôt: **21.09.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **01.10.2009 FR 0904682**

(71) Demandeur: **IFP Energies nouvelles**
**92852 Rueil-Malmaison Cedex (FR)**

(72) Inventeurs:
• **Algive, Lionnel**
**92500 Rueil Malmaison (FR)**
• **Bekri, Samir**
**92500 Rueil Malmaison (FR)**
• **Vizika, Olga**
**92500 Rueil Malmaison (FR)**

(54) **Méthode pour optimiser l'injection d'un fluide réactif dans un milieu poreux**

(57)  - Methode pour optimiser l'injection d'un fluide au sein d'un milieu poreux, au moyen d'une modelisation de la migration du fluide au sein du milieu.
- On construit un modèle de réservoir. En chaque maille de ce modèle on construit un modèle PNM représentatif du réseau de pore dans la maille. Puis, on détermine en chaque maille, la concentration du fluide en resolvant l'equation de transport réactif à l'échelle d'une maille. Pour ce faire, on tient compte de modifications de concentrations du fluide au niveau de l'interface fluide/roche à l'echelle des pores, au moyen des modèles PNM. On calcule ainsi des coefficients correctifs pour l'equation de transport réactif ,et une loi entre la perméabilité du milieu poreux et la porosité du milieu poreux. Enfin, on optimise l'injection du fluide en fonction des concentrations en chaque maille.
- Application notamment ä l'exploitation de gisements pétroliers.

Fig. 2.b

Printed by Jouve, 75001 PARIS (FR)

## EP 2 315 144 A1

**Description**

La présente invention concerne le domaine de l'exploitation de milieux poreux souterrains, et notamment le stockage géologique du dioxyde de carbone ou la récupération améliorée d'hydrocarbure par injection de $CO_2$.

Le stockage géologique est envisagé pour réduire les émissions anthropiques de dioxyde de carbone, gaz à effet de serre. Ce gaz est un fluide réactif au sein du milieu poreux. Sa dissolution dans l'eau entraîne l'acidification de celle-ci. Cette perturbation de l'équilibre thermodynamique initial cause une modification de la structure de la roche en dissolvant et/ou précipitant des minéraux. En modifiant ainsi la distribution de taille de pore du milieu poreux, le $CO_2$ impacte les propriétés pétrophysiques de la roche, notamment la porosité et la perméabilité. D'autres propriétés telles que la pression capillaire et les perméabilités relatives peuvent être aussi affectées. La mouillabilité du nouveau minéral à l'interface roche/fluide peut différer de l'état initial.

Pour ces raisons et pour prévoir la migration du $CO_2$ au sein du réservoir, les opérateurs ont besoin de logiciels, appelés simulateurs numériques, aptes à rendre compte des écoulements réactifs. La qualité de ces simulations est précieuse pour prévoir d'éventuelles pertes d'injectivité, des affaiblissements mécaniques, des créations de chemins préférentiels et/ou une remise en cause de l'intégrité de la couverture. Selon le résultat de ces simulations la décision d'utiliser ou non le réservoir étudié pour stocker du $CO_2$ est prise. On évalue aussi les quantités de $CO_2$ pouvant être injectées ainsi que le débit optimal d'injection.

On connaît des logiciels permettant de simuler l'écoulement d'un fluide et/ou le transport d'une espèce à l'échelle d'un réservoir. Ces logiciels sont appelés « simulateurs d'écoulement ». La simulation d'écoulement consiste à résoudre l'équation de Darcy pour déterminer la vitesse du fluide. La simulation du transport réactif d'une espèce consiste à résoudre l'équation macroscopique du transport réactif pour déterminer la concentration du fluide, ou au moins une espèce contenue dans ce fluide. En pratique, à partir d'un maillage du milieu poreux, un tel logiciel simule un écoulement tridimensionnel et triphasique de plusieurs composants. Il calcule la vitesse du fluide ($CO_2$) aux interfaces des mailles du maillage et, dans chaque maille, la concentration d'au moins une espèce ($CO_2$), supposée homogène sur ce volume. Les équations de conservation molaires sont résolues *via* un système totalement couplé, linéarisé par une approche de Newton.

L'équation macroscopique du transport réactif s'écrit sous la forme suivante pour une cinétique d'ordre 1 :

$$\frac{\partial \overline{c}}{\partial t} + \nabla \cdot \left( \overline{v}^{\,*} \overline{c} - \overline{\mathrm{D}}^{\,*} \cdot \nabla \overline{c} \right) + \overline{\gamma}^{\,*} \left( \overline{c} - c^{\,*} \right) = 0$$

où $\overline{c}$ est la concentration moyenne de l'espèce chimique étudiée,
$\overline{c}^*$ est la concentration d'équilibre,
$\overline{\gamma}^*$ est la vitesse apparente moyenne de la réaction,
$\overline{v}^*$ est la vitesse moyenne du soluté,
$\overline{D}^*$ est le tenseur dispersif moyen du soluté.

La démonstration de cette formule peut être trouvée dans l'article suivant :

- Shapiro M., Brenner H., Dispersion of a chemically reactive solute in a spatially model of a porous medium, Chemical Engineering Science, 1988, 43, p. 551-571.

La simulation des écoulements permet de déterminer la vitesse moyenne $\overline{v}^*$ du soluté et le tenseur dispersif moyen $\overline{D}^*$ du soluté.

La vitesse apparente moyenne $\overline{\gamma}^*$ de la réaction, et la concentration d'équilibre $c^*$ sont déterminées au moyen d'un logiciel appelé « module géochimique ». Ce type de logiciel permet de tenir compte de la création ou de la consommation d'espèces dues aux réactions intervenant dans ces équations. Certains simulateurs d'écoulement intègrent directement un module géochimique. On connaît par exemple le simulateur COORES® (IFP, France). Une description de tels simulateurs est fournie dans les documents suivants :

- Le Gallo, Y. et al., "Long-term flow simulation of CO2 storage in saline aquifer". Proceedings of the 8th Conference on GreenHouse Gas Technologies, IEA, Trondheim, Norway, 2006.

- Trenty, L., et al., "A sequential splitting strategy for CO2 storage modelling". Proceedings of 10th European Conference on the Mathematics of Oil Recovery, EAGE, Amsterdam, The Netherlands, 2006.

Un module géochimique est basé sur le concept du mélangeur parfait (modèle 0D). Il calcule, pour un système supposé fermé, la concentration d'équilibre de chaque espèce (solide, dissoute ou gazeuse), ainsi que l'évolution de leur concentration au cours du temps à l'aide de données thermodynamiques (constantes de réaction, enthalpie, etc.) et cinétiques (vitesses de réaction, énergie d'activation, etc.).

Cependant, un tel modèle est fondé sur l'étude d'équilibre à partir de concentrations moyennes, alors que ce sont les concentrations à l'interface roche/fluide qui interviennent en réalité lors des réactions surfaciques de dissolution/précipitation. Afin de rendre compte de cette différence, un correctif empirique, parfois appelé « efficacité de la réaction », est généralement introduit.

De même, les paramètres de transport intervenant dans l'équation macroscopique de convection-dispersion sont impactés par la présence de réactions surfaciques. En effet, cette équation est fonction de la vitesse et de la dispersion du soluté qui diffèrent de celles *a priori* connues du fluide en cas de réaction à la surface. Cela est dû au fait que le profil de concentration à l'échelle du pore n'est plus uniforme. Aussi, comme pour le terme source, des termes correctifs à la vitesse, la dispersion et la réaction apparente sont introduits dans l'équation de transport classique développée pour un traceur inerte. Ces termes correctifs sont appelés « coefficients de proportionnalité de transport ».

Ainsi, au sein des simulateurs d'écoulement réactif, l'équation macroscopique du transport réactif est généralement écrite à l'aide de l'équation classique à laquelle on ajoute des correctifs, les coefficients de proportionnalité :

$$\frac{\partial \overline{c}}{\partial t} + \nabla \cdot \left( \overline{v}' \overline{v c} - \overline{D}' \overline{D} \cdot \nabla \overline{c} \right) + \overline{\gamma}' \overline{\gamma} \cdot \left( \overline{c} - c^* \right) = 0$$

$$\overline{v}^* = \overline{v}' \cdot \overline{v} \qquad \overline{D}^* = \overline{D}' \cdot \overline{D} \qquad \overline{\gamma}^* = \overline{\gamma}' \cdot \overline{\gamma}$$

où $\overline{\gamma}$ est la cinétique de réaction estimée dans le cadre du mélangeur parfait;

$\overline{v}$ est la vitesse moyenne du fluide,

$\overline{D}$ est le tenseur dispersif classique,

$\overline{v}'$, $\overline{D}'$ et $\overline{\gamma}'$ sont les coefficients de proportionnalité du transport réactif.

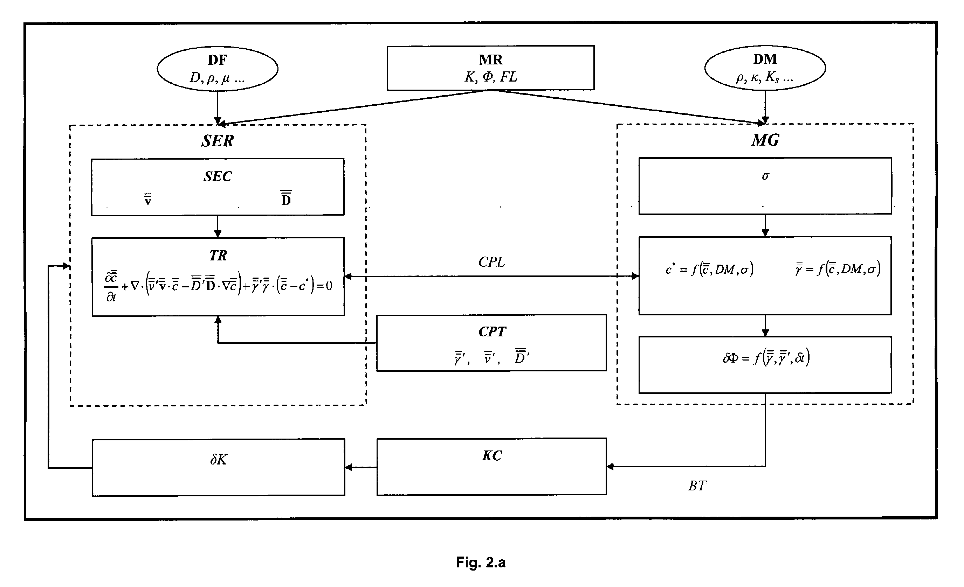

La figure 2a décrit la méthode classique pour résoudre l'équation de transport réactif dans le cadre de milieu poreux.

Dans un premier temps, on acquiert un ensemble de données relatives au milieu poreux et aux fluides présents dans ce milieu. On acquiert des données relatives au fluide (*DF*), telles que le coefficient de diffusion moléculaire *D*, la densité $\rho$ ou encore la viscosité $\mu$. On acquiert des données relatives à la minéralogie du milieu (DM), telles que la densité $\rho$, la vitesse intrinsèque de réaction $\kappa$, le produit de solubilité du minéral $K_s$. Enfin, on acquiert des propriétés relatives au milieu, telles que la perméabilité K, la porosité $\Phi$, ou encore les faciès lithologiques *FL*. Puis on construit un modèle de réservoir (*MR*), c'est-à-dire une discrétisation du milieu poreux sous forme d'un maillage, dans lequel chaque maille contient des propriétés relatives au milieu poreux et au fluide présent dans ce milieu.

Ensuite, on réalise une simulation des écoulements au sein du modèle de réservoir, au moyen d'un simulateur d'écoulement réactif (*SER*), auquel les données relatives au fluide sont données comme données d'entrée. Ces simulations d'écoulement (*SEC*) permettent de déterminer la vitesse moyenne $\overline{v}$ du fluide et le tenseur dispersif moyen $\overline{D}$ du soluté.

On détermine de façon empirique des coefficients de proportionnalité du transport (*CPT*): $\overline{\gamma}'$, $\overline{v}'$, $\overline{D}'$.

Parallèlement, à partir du modèle de réservoir et des données minéralogiques (*DM*), on utilise un module géochimique (*MG*) pour déterminer :

- une estimation de la surface réactive ($\sigma$) ;

- puis la vitesse apparente moyenne de la réaction ($\overline{\gamma}$)*,* à partir de la surface réactive ($\sigma$), des données minéralogiques et d'une concentration moyenne $\overline{c}$ de l'espèce chimique étudiée. Cette concentration est déduite de l'équation de transport qui elle-même dépend du terme source. Il existe donc un couplage (*CPL*) entre le module géochimique (*MG*) et le simulateur d'écoulement réactif ;

- et enfin, une variation de porosité $\delta\Phi$ en fonction du temps *t*. Celle-ci est estimée en fonction de la vitesse apparente moyenne de la réaction ($\overline{\gamma}$), et du coefficient de proportionnalité du transport associé à cette vitesse, noté $\overline{\gamma}'$.

A partir de cette variation de porosité $\delta\Phi$ et de la loi empirique de Kzeny-Carman (*KC*), on détermine une

variation de perméabilité $\delta K$.

Cette variation de perméabilité $\delta K$, les coefficients de proportionnalité du transport (*CPT*), et la vitesse apparente moyenne de la réaction ($\bar{\gamma}$) sont fournies au simulateur d'écoulement réactif (SER) pour résoudre l'équation de transport. Le résultat est la concentration moyenne $\bar{c}$ de l'espèce chimique étudiée. Cette concentration est utilisée par le module géochimique (*MG*) via le couplage (*CPL*).

La méthode usuelle consiste à itérer, selon une boucle temporelle (*BT*), entre ces deux modules selon des schémas plus ou moins sophistiqués jusqu'à atteindre leur convergence simultanée. Puis, pour ce champ de concentration, la quantité de minéraux précipitée ou dissoute est calculée par le module géochimique. Celle-ci est reliée empiriquement à une variation de perméabilité (relation de Kozeny-Carman par exemple). La connaissance de la perméabilité est en effet nécessaire pour déterminer le champ de vitesse à l'itération temporelle suivante. Puis il suffit de réitérer avec ce nouvel écoulement autant de fois que désiré.

Les coefficients de proportionnalité du transport (*CPT*) dépendent des régimes d'écoulement et de réaction. Ils rendent compte des spécificités locales du transport réactif (non uniformité du profil de concentration) lorsque les phénomènes de précipitation et de dissolution sont étudiés à l'échelle globale. En raison de cette interaction fondamentale entre les deux échelles, il apparaît que des imprécisions conséquentes au sein des simulations numériques peuvent être commises si les coefficients de proportionnalité de transport sont mal évalués. Cependant, faute d'informations adéquates, ces coefficients sont actuellement déduits de quelques relations empiriques ou, à défaut, totalement omis (coefficients de proportionnalité égaux à 1). Ils peuvent être également déterminés en résolvant le problème aux valeurs propres associé. Cette technique, issue de la théorie des moments est décrite dans le papier de Shapiro & Brenner, cité précédemment. Cependant, des solutions semi analytiques ne sont disponibles que pour des géométries basiques telles que le cylindre circulaire ou les plaques parallèles.

L'objet de l'invention concerne une méthode alternative pour optimiser l'injection d'un fluide au sein d'un milieu poreux, notamment un fluide réactif. La méthode permet de suivre la migration de ce fluide réactif dans le milieu poreux, au moyen d'une simulation du transport réactif du fluide réactif au sein de ce milieu. L'invention s'affranchit des problèmes des méthodes antérieures en tenant compte des réactions chimiques et des modes d'écoulement à l'échelle du pore du milieu poreux. Pour ce faire, la méthode se base un modèle de réseau de pore, PNM, pour déterminer des lois reliant perméabilité et porosité et des coefficients de proportionnalité qui tiennent compte de ces deux paramètres.

**La méthode selon l'invention**

L'invention concerne une méthode pour optimiser l'injection d'un fluide au sein d'un milieu poreux comportant un réseau de pores, à partir d'une discrétisation du milieu poreux en un ensemble de mailles. Selon la méthode, on modélise la migration du fluide au sein du milieu poreux en déterminant en chaque maille la concentration d'une espèce chimique intervenant dans une réaction chimique entre le fluide et le milieu, en résolvant une équation de transport réactif à l'échelle d'une maille. La méthode comporte les étapes suivantes:

- on résout l'équation en tenant compte de modifications de concentrations de l'espèce chimique à l'échelle des pores, au moyen d'une représentation du réseau de pores pour chaque maille par un modèle PNM; et

- on optimise l'injection du fluide au sein du milieu poreux, en fonction des concentrations en chaque maille.

On peut tenir compte des modifications de concentrations à l'échelle des pores en modifiant structurellement le modèle PNM en chaque maille. Selon l'invention, on peut résoudre l'équation en réalisant les étapes suivantes:

i. on construit une représentation du réseau de pores pour chaque maille, au moyen d'un modèle PNM comportant un ensemble de noeuds de géométrie connue reliés par des canaux de géométrie connue ;

ii. on définit l'équation de transport réactif à l'échelle d'une maille en reliant la concentration $\bar{\bar{c}}$ à trois paramètres, une vitesse moyenne de ladite espèce $\bar{v}$, un tenseur dispersif moyen de ladite espèce $\bar{\bar{D}}$ et une vitesse apparente de réaction moyenne sur une maille $\bar{\bar{\gamma}}$, chacun des paramètres étant pondéré par un coefficient de proportionnalité du transport à l'échelle d'une maille $\bar{v}'$, $\bar{\bar{D}}'$ et $\bar{\bar{\gamma}}'$;

iii. on détermine les coefficients $\bar{\bar{v}}'$, $\bar{\bar{D}}'$ et $\bar{\bar{\gamma}}'$ au moyen du modèle PNM ;

iv. on prend en compte des modifications structurales du réseau de pore engendrées par réaction chimique, en modifiant le modèle PNM et en déduisant de ce modèle PNM modifié des propriétés pétrophysiques ;

v. on résout l'équation à partir des coefficients $\bar{v}'$, $\bar{\bar{D}}'$ et $\bar{\bar{\gamma}}'$, des propriétés pétrophysiques, et de mesures relatives au milieu et au fluide.

Pour déterminer les coefficients de proportionnalité à l'échelle d'une maille $\overline{\overline{v}}\,\overline{\overline{D}}'$ et $\overline{\overline{\gamma}}$, on peut réaliser les étapes suivantes :

a. on détermine des coefficients de proportionnalité du transport à l'échelle du pore $\overline{\overline{v}}'$, $\overline{\overline{D}}'$ et $\overline{\gamma}$, en chaque canal et noeud du modèle PNM ;

b. on détermine une concentration de l'espèce en chaque canal et noeud du modèle PNM, en résolvant une équation du transport réactif à l'échelle du pore, à partir des coefficients de proportionnalité du transport à l'échelle du pore $\overline{\overline{v}}'$, $\overline{\overline{D}}'$ et $\overline{\gamma}$;

c. on déduit des résultats des étapes a et b, les coefficients de proportionnalité du transport à l'échelle de la maille $\overline{\overline{v}}'$, $\overline{\overline{D}}'$ et $\overline{\overline{\gamma}}$ par une méthode d'homogénéisation.

Selon un mode de réalisation, l'équation de transport réactif à l'échelle d'une maille s'écrit :

$$\frac{\partial \overline{\overline{c}}}{\partial t} + \nabla \cdot \left( \overline{\overline{v}}' \overline{\overline{\mathbf{v}}} \cdot \overline{\overline{c}} - \overline{\overline{D}}' \overline{\overline{\mathbf{D}}} \cdot \nabla \overline{c} \right) + \overline{\overline{\gamma}}' \overline{\overline{\gamma}} \cdot \left( \overline{\overline{c}} - c^\bullet \right) = 0$$

où $c^*$ est une concentration d'équilibre de ladite espèce.
Les coefficients de proportionnalité du transport à l'échelle du pore $\overline{v}'$, $\overline{D}'$ et $\overline{\gamma}$ peuvent être définis en fonction des moments spatiaux de l'espèce. On peut alors les déterminer en déterminant les moments spatiaux de l'espèce au moyen d'une technique des moments ou d'une technique de marches aléatoires. On peut également définir les coefficients de proportionnalité du transport à l'échelle du pore $\overline{v}'$, $\overline{D}'$ et $\overline{\gamma}$, de la façon suivante :

$$f(PeDa) = 1 + \frac{a}{\left( 1 + \frac{b}{(PeDa)^\alpha} \right)^\beta} \quad \text{où} \quad f = \overline{\gamma}' \; ou \; \overline{v}' \; ou \; \overline{D}'$$

et où *PeDa* est le nombre de Péclet-Damköhler, et *a*, b, $\alpha$ et $\beta$ sont des paramètres définis en fonction de la géométrie du modèle PNM.
Selon l'invention, on peut modifier le modèle PNM pour prendre en compte les modifications structurales du réseau de pore engendrées par réaction chimique en déterminant une concentration en espèce chimique aux parois de chaque noeud et canal, et en en déduisant une variation de géométrie des noeuds et canaux du modèle PNM.
Les mesures utilisée pour résoudre l'équation peuvent comporter au moins les mesures suivantes :

- des mesures relatives au fluide, telles que : coefficient de diffusion moléculaire, densité et viscosité;

- des mesures relatives au milieu, telles que : perméabilité, porosité, faciès lithologiques, densité et vitesse intrinsèque de réaction.

Enfin, selon un mode de réalisation, le fluide est du CO2, et on optimise l'injection de $CO_2$ au sein du milieu poreux en réalisant au moins l'une des opérations suivantes :

- on modifie une quantité de $CO_2$ injectée au sein du milieu ;

- on modifie un débit d'injection de $CO_2$ ;

- on réalise de nouveaux forages au sein du milieu pour injecter le $CO_2$ ;

- on met en place au moins un dispositif de remédiation au sein du milieu pour remédier à des fuites du $CO_2$ vers la

surface ou un acquière ;

- on ajoute des additifs dans le $CO_2$ injecté.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 représente un schéma d'un réseau de pores et de sa cellule-unité.

- la figure 2a illustre les différentes étapes pour résoudre l'équation de transport réactif selon les méthodes antérieures.

- la figure 2b illustre les différentes étapes pour résoudre l'équation de transport réactif selon l'invention.

- la figure 3 représente, en fonction du nombre de Péclet-Damköhler, les trois coefficients de proportionnalité de l'équation macroscopique de transport réactif pour trois géométries classiquement utilisées dans la conceptualisation du réseau de pores. Les symboles sont les valeurs obtenues via la méthode de marche aléatoire, et la ligne continue, la fonction générique utilisée pour exprimer analytiquement ces coefficients. Cette fonction facilite l'utilisation ultérieure des coefficients de proportionnalité dans le modèle PNM.

- la figure 4 représente, en fonction du nombre de Péclet-Damköhler, les trois coefficients de proportionnalité de transport à l'échelle de la carotte (ensemble du réseau) pour une distribution de taille de pore uniforme. Ces coefficients dépendent de l'écoulement (nombre de Péclet).

- la figure 5 illustre l'obtention de plusieurs relations perméabilité/porosité, pour une même roche, selon le régime d'écoulement réactif.

**Description détaillée de la méthode**

L'invention concerne une méthode pour exploiter un milieu poreux souterrain en y injectant un fluide, notamment un fluide réactif. La méthode permet de suivre la migration de ce fluide réactif dans le milieu poreux, au moyen d'une simulation du transport réactif du fluide réactif au sein de ce milieu.
Selon un exemple de réalisation, le fluide réactif est du $CO_2$. Celui-ci se dissout généralement au sein du milieu poreux dans de l'eau liquide ou de la saumure. L'étude de la migration du $CO_2$ injecté, revient donc à étudier l'écoulement de la saumure en tenant compte des réactions chimiques du soluté qu'est le $CO_2$.
Dans ce cadre, la méthode vise à déterminer la concentration de $CO_2$ en tout point du milieu. On peut également déterminer la concentration d'autres espèces chimiques intervenant dans une réaction chimique entre le fluide et le milieu, telles que des ions, ou des molécules ($CaCO_3$, $Ca^{2+}$, $CO_2$, $CO_3^{2}$,...).
Il s'agit donc d'acquérir des données relatives au milieu poreux et au fluide réactif ($C_2$ dissous), de construire un modèle de réservoir discrétisant le milieu poreux, de résoudre l'équation de transport réactif pour déterminer les concentrations en $CO_2$ dissous), en chaque maille du modèle de réservoir, de façon à suivre les mouvements de $CO_2$ dissous et autres espèces chimiques, au sein du milieu. Enfin, à partir de cette information, l'exploitation du milieu peut être modifiée : réalisation de nouveaux forages, modification de la pression d'injection, mise en place de dispositif de remédiation, ajout d'additifs dans le $CO_2$...
Ainsi, la méthode comporte quatre étapes principales :

1. On acquiert des données relatives au milieu poreux et au fluide réactif ($CO_2$ dissous);

2. On construit un modèle de réservoir discrétisant le milieu poreux ;

3. On détermine les concentrations en $CO_2$ dissous et autres espèces chimiques en chaque maille du modèle ;

4. On optimise l'injection de $CO_2$ au sein du milieu poreux.

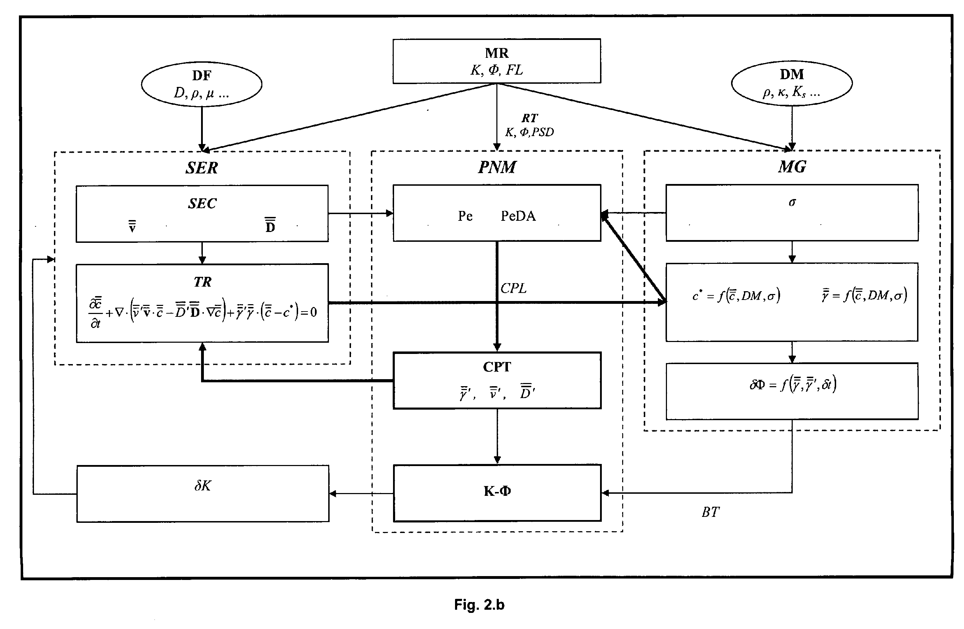

La figure 2b décrit les trois premières étapes de la méthode selon l'invention.

1. Acquisition de données relatives au milieu poreux et au fluide

Dans un premier temps, on acquiert un ensemble de données relatives au milieu poreux et aux fluides présents dans ce milieu. On acquiert des données relatives au fluide (*DF*), telles que le coefficient de diffusion moléculaire *D*, la densité $\rho$ ou encore la viscosité $\mu$.

On acquiert également des données relatives à la minéralogie du milieu (*DM*), telles que la densité $\rho$, la vitesse intrinsèque de réaction $\kappa$, le produit de solubilité du minéral $K_s$.

On réalise également un classement des roches du milieu, appelé « rock type » (*RT*). Il s'agit de regrouper des faciès lithologiques pour former des groupes ayant des propriétés communes, telles que la perméabilité, la porosité, ou la distribution des tailles de pores (PSD).

Enfin, on acquiert des propriétés relatives au milieu, telles que la perméabilité K, la porosité $\phi$, ou encore les faciès lithologiques *FL*.

2. Construction d'un modèle de réservoir discrétisant le milieu poreux

On construit un modèle de réservoir (*MR*), c'est-à-dire une discrétisation du milieu poreux sous forme d'un maillage, dans lequel chaque maille contient des propriétés relatives au milieu poreux et au fluide présent dans ce milieu.

3. Détermination des concentrations en $CO_2$ dissous en chaque maille du modèle

Pour déterminer la concentration en $CO_2$ dissous et/ou autres espèces chimiques en chaque maille du modèle, on résout l'équation de transport réactif :

$$\frac{\partial \bar{\bar{c}}}{\partial t} + \nabla \cdot \left( \bar{\bar{v}}' \bar{\bar{\mathbf{v}}} \cdot \bar{\bar{c}} - \bar{\bar{D}}' \bar{\bar{\mathbf{D}}} \cdot \nabla \bar{\bar{c}} \right) + \bar{\bar{\gamma}}' \bar{\bar{\gamma}} \cdot \left( \bar{\bar{c}} - c^{\bullet} \right) = 0$$

avec :

$\bar{\bar{c}}$ :          concentration de l'espèce chimique étudiée moyennée sur une maille du modèle de réservoir

$\bar{\bar{v}}$ :          vitesse du soluté moyennée sur une maille du modèle de réservoir

$\bar{\bar{D}}$ :          tenseur dispersif du soluté moyenné sur une maille du modèle de réservoir

$c^*$ :          concentration d'équilibre de l'espèce chimique étudiée

$\bar{\bar{\gamma}}$ :          vitesse apparente de la réaction moyennée sur une maille du modèle de réservoir

$\bar{\bar{v}}'$, $\bar{\bar{D}}'$ et $\bar{\bar{\gamma}}'$ :    coefficients de proportionnalité du transport pour une maille du modèle réservoir

Selon l'invention, on résout cette équation, c'est-à-dire que l'on détermine $\bar{\bar{c}}$ en chaque maille du modèle de réservoir, au moyen d'une boucle temporelle, basée sur un couplage (CPL) entre un simulateur d'écoulement réactif (SER), un module géochimique (MG) et un modèle de réseau de pore (PNM). La figure 2b illustre ce couplage.

Pour augmenter la fiabilité de ces simulations et ainsi optimiser les injections de $CO_2$, la présente invention propose une méthode basée sur l'approche réseau de pores qui permet d'alimenter un « simulateur d'écoulement réactif » en données spécifiques aux écoulements réactifs. Ce jeu de données, basé sur une modélisation physique des interactions roche/fluide à l'échelle du pore, est en mesure d'accroître grandement la qualité des simulations. L'invention permet d'obtenir physiquement ces coefficients en résolvant le problème de transport à l'échelle du pore, puis en en déduisant les paramètres macroscopiques correspondant à l'échelle de la carotte. De cette manière, la structure du milieu poreux est prise en considération. Cette technique permet également de relier la variation de porosité, due aux précipitations et dissolutions, à une évolution correcte de perméabilité. En effet, à partir de l'approche du réseau de pores, des lois physiques perméabilité/porosité peuvent être obtenues. Elles sont plus fiables que les actuelles relations empiriques telles que celle de Kozeny-Carman.

On réalise une simulation des écoulements au sein du modèle de réservoir, au moyen d'un simulateur d'écoulement réactif (*SER*), auquel les données relatives au fluide sont données comme données d'entrée. Ces simulations d'écoulement (*SEC*) permettent de déterminer la vitesse moyenne $\bar{v}$ du soluté et le tenseur dispersif moyen $\bar{D}$ du soluté.

Parallèlement, à partir du modèle de réservoir et des données minéralogiques (*DM*), on utilise un module géochimique (*MG*) pour déterminer :

- une estimation de la surface réactive ($\sigma$) ;

- puis la vitesse apparente moyenne de la réaction ($\bar{\bar{\gamma}}$) et la concentration d'équilibre *c\** de l'espèce chimique étudiée, à partir de la surface réactive ($\sigma$), des données minéralogiques et d'une concentration moyenne $\bar{\bar{c}}$ de l'espèce chimique étudiée. Cette concentration est déduite de l'équation de transport qui elle-même dépend du terme source. Il existe donc un couplage (*CPL*) entre le module géochimique (*MG*) et le simulateur d'écoulement réactif ;

- et enfin, une variation de porosité $\Phi\delta$ en fonction du temps *t*. Celle-ci est estimée en fonction de la vitesse apparente moyenne de la réaction ($\bar{\bar{\gamma}}$), et du coefficient de proportionnalité du transport associé à cette vitesse, noté $\bar{\bar{\gamma}}$.

La concentration d'équilibre et la cinétique de réaction ne sont pas des paramètres exogènes mais dépendent de toutes les espèces impliquées dans le système chimique étudié. Elles sont généralement calculées à l'aide d'un module géochimique qui suppose, pour sa résolution, un système fermé. C'est pourquoi, en présence d'apports dus au transport, les simulateurs sont obligés d'itérer jusqu'à atteindre la convergence simultanée des modules de transport et de géochimie. Dans notre approche, ces paramètres sont considérés connus et constants (on se place dans le cadre du module de transport réactif).

Pour résoudre l'équation macroscopique du transport réactif, il reste donc à déterminer les coefficients de proportionnalité du transport (*CPT*) : $\bar{\bar{v}}'$, $\bar{\bar{D}}'$ et $\bar{\bar{\gamma}}'$.

Selon l'invention, ces coefficients sont déterminés au moyen d'un modèle de réseau de pore, dit modèle PNM, et en réalisant les étapes suivantes :

a. on construit un modèle de réseau de pore PNM pour chaque maille du modèle de réservoir

b. on détermine les coefficients de proportionnalité du transport à l'échelle du pore

c. on résout l'équation macroscopique du transport réactif à l'échelle du pore

d. on en déduit les coefficients de proportionnalité du transport à l'échelle de la maille du modèle de réservoir

e. on modifie la structure du réseau et on en déduit de nouvelles propriétés pétrophysiques

f. on détermine les concentrations en CO2 en chaque maille du modèle.

a. Construction de modèles de réseau de pore PNM

L'invention repose sur un modèle du réseau de pores. Une telle approche est en effet un outil efficace pour considérer les phénomènes se déroulant à l'échelle du pore.

Pour ce faire, on utilise un type de représentation bien connue des spécialistes, appelé « Pore Network Modelling » (PNM). Une description détaillée de cette technique de modélisation du réseau de pores (PNM) en termes d'approche, de caractéristiques du modèle et de sa construction, est présentée dans le document suivant :

Laroche, C. and Vizika, O., "Two-phase flow properties prediction from small-scale data using pore-network modeling", Transport in Porous Media, (2005), 61, 1, 77-91.

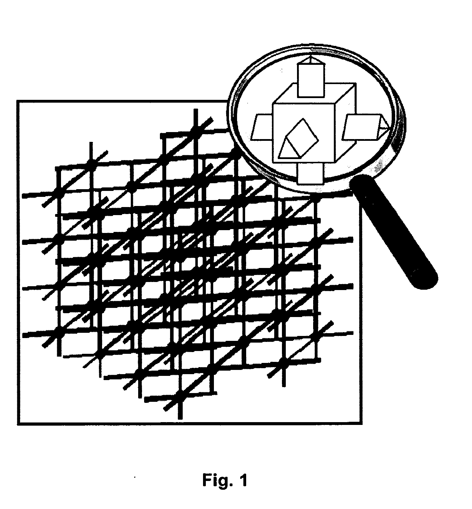

Ce modèle du réseau de pores est une représentation conceptuelle d'un milieu poreux, dont le but est de rendre compte de la physique des écoulements et des phénomènes de transport, sans s'attacher à la structure réelle du réseau formé par les pores du milieu poreux (roche). La structure y est modélisée par un réseau tridimensionnel de pores, constituant les noeuds, interconnectés par des canaux, représentant les liens entre les pores. Bien qu'il ne décrive pas la morphologie exacte du milieu poreux, un tel modèle est capable de prendre en compte les caractéristiques essentielles de topologie et de morphologie de l'espace poreux. Un milieu poreux réel comporte des angulosités et des recoins qui favorisent l'écoulement du fluide mouillant, même lorsque le centre du canal ou du pore est rempli par un fluide non mouillant. Pour rendre compte de ce fait, qui influe sur la récupération, il est préférable de considérer des sections angulaires pour les pores et les canaux. Le réseau de pores est donc représenté par une matrice cubique tridimensionnelle de pores, interconnectés entre eux par des canaux, et possédant, généralement, un nombre de coordination de six (mais il peut être variable), ce qui signifie que 6 canaux sont connectés à chaque pore. On appelle cellule unité du modèle de réseau, un noeud (N) et ses canaux (C), comme illustré sur la figure 1.

Pour construire un tel modèle, il est nécessaire de procéder en laboratoire à des expériences d'invasion de mercure (« porosimétrie mercure »). Cette technique, bien connue des spécialistes, permet de déterminer les distributions des tailles de seuils, représentés par les canaux dans le modèle réseau (PNM).

A partir de cette distribution, on détermine la distribution des tailles de pores (PSD), représenté par des sphères ou des cubes dans le modèle réseau (PNM) (figure 1). Pour cela on considère une corrélation entre les pores et leurs canaux adjacents. On fixe alors un rapport d'aspect (AR) reliant le diamètre de pore $d_p$ à celui du canal $d_c$. Lors de la construction du réseau, les diamètres des canaux sont assignés de manière aléatoire en accord avec la distribution expérimentale obtenue par porosimétrie mercure. Il faut noter que dans le cas d'une section triangulaire, le diamètre correspond à celui du cercle inscrit dans le triangle considéré.

Cette approche a initialement été développée afin d'étudier les écoulements multiphasiques, où la concentration pouvait être considérée comme uniforme à l'échelle du pore. Toutefois, cette hypothèse n'est plus valide lorsqu'on s'intéresse à des espèces dissoutes comme les acides générés par la dissolution du $CO_2$ dans l'eau. En effet, le profil de concentration local et les changements de structure poreuse doivent être pris en compte lors de la résolution des équations. Ainsi, selon l'invention, on modifie l'approche réseau de pore PNM habituelle, pour tenir compte de ces contraintes.

Grâce à l'utilisation d'un modèle PNM, les effets de la topologie (connexion, tortuosité, etc.) sur les paramètres macroscopiques homogénéisés sont pris en compte.

On construit ainsi un modèle PNM pour chaque maille du modèle de réservoir.

b. Détermination de coefficients de proportionnalité du transport à l'échelle du pore

Cette étape consiste à déterminer des coefficients de proportionnalité de transport, $\bar{v}'$, $\overline{D}'$ et $\bar{\gamma}$ pour chaque élément du réseau de pores : chaque pore et chaque canal. Ces pores et ces canaux sont représentés par des éléments géométriques simples: capillaire circulaire, triangulaire ou elliptique pour les premiers, sphère ou cube pour les seconds (figure 1).

Dans l'approche réseau de pores, on n'utilise pas les équations locales continues, telle que Navier-Stokes, mais une équation macroscopique, solution moyennée de la précédente pour les géométries simples constitutives du réseau (par exemple, loi de Poiseuille). Ceci permet ensuite de faire des simulations sur un nombre de pores plus grand et donc susceptible de constituer un Volume Élémentaire Représentatif. Dans le cadre du transport réactif, on cherche donc à déterminer la concentration moyenne de chaque pore c vérifiant l'équation macroscopique de transport rappelée ci-dessous :

$$\frac{\partial \overline{c}}{\partial t} + \nabla \cdot \left( \overline{v}' \, \overline{\mathbf{v}} \, \overline{c} - \overline{D}' \, \overline{\mathbf{D}} \cdot \nabla \overline{c} \right) + \overline{\gamma}' \, \overline{\gamma} \cdot \left( \overline{c} - c^{\star} \right) = 0$$

Pour ce faire, on utilise les formules suivantes qui donnent les coefficients de proportionnalité aux temps longs (régime asymptotique) en fonction des moments spatiaux $m_i(t)$ du soluté. On rappelle qu'un moment spatial est égal à l'intégration, sur le volume considéré, de la concentration pondérée par une puissance du vecteur position. Si cette puissance est nulle, on calcule alors la quantité présente dans le milieu. Les moments d'ordre 1 et 2, quant à eux, servent à calculer le barycentre, i.e. le centre de gravité, et l'écart type, i.e. l'étalement par rapport à ce centre. Ces formules sont décrites par exemple dans Shapiro M., Brenner H., "Taylor dispersion of chemically reactive species: irreversible first-order reactions in bulk and on boundaries", Chemical Engineering Science, 1986, 41, n° 6, p. 1417-1433.

$$\bar{\gamma}' = -\frac{1}{m_0} \frac{dm_0}{dt}$$

$$\bar{v}' = \frac{d}{dt}\left(\frac{m_1}{m_0}\right) = \frac{1}{m_0}\left[\frac{d\,m_1}{dt} + \bar{\gamma}' m_1\right]$$

$$\overline{D}' = \frac{d}{dt}\left(\frac{m_2}{m_0} - \left(\frac{m_1}{m_0}\right)^2\right) = \frac{1}{m_0}\left[\frac{d\,m_2}{dt} - \left(\overline{v}'m_1 + m_1\overline{v}'\right) + \overline{\gamma}'m_2\right]$$

où

$$m_i(t) = \int c(r,t)r^i\,dr\,.$$

Puis on détermine chacun des coefficients en calculant les moments spatiaux. Pour ce faire, on peut soit appliquer la technique des moments et la résolution du problème aux valeurs propres si une solution analytique existe, soit appliquer la technique des marches aléatoires pour étudier la propagation d'un nuage de particules réactives.

La technique des moments : calcul analytique des moments spatiaux du soluté

Cette technique est utilisée uniquement pour des géométries bidimensionnelles (plaques parallèles, cylindre...). Cette technique est décrite dans le document suivant :

Shapiro M., Brenner H., "Taylor dispersion of chemically reactive species: irreversible first-order reactions in bulk and on boundaries", Chemical Engineering Science, 1986, 41, n° 6, p. 1417-1433.

La technique des moments consiste à exprimer les moments $m_i$ en résolvant le problème aux valeurs propres correspondant, fonction des données locales du transport, ce qui permet de terminer le changement d'échelle (échelle locale vers l'échelle moyenne des pores).

La technique des marches aléatoires : calcul numérique des moments spatiaux du soluté

Pour un capillaire triangulaire ou elliptique, les trois variables spatiales de la particule de soluté sont nécessaires pour caractériser sans ambiguïté ses propriétés de transport et d'écoulement. Dans ce cas, la résolution ne peut être que numérique et on privilégie la marche aléatoire, qui est simple à mettre en oeuvre. Une marche aléatoire est le résultat d'un déplacement diffusif stochastique (aléatoire). Par extension, on appelle méthode de marche aléatoire le suivi de la propagation d'un nuage de particules dont une partie du mouvement est décidée selon une loi de probabilité.

Dans cette approche Lagrangienne (suivie de particule fluide dans son mouvement) nous suivons le déplacement d'un nuage de particules, suffisamment dense pour être statistiquement représentatif. Le mouvement de chaque particule est divisé en une partie convective déterministe et une partie diffusive stochastique. Quand elle heurte la paroi, la particule est soit consommée soit réfléchie. Afin d'être précis et contrairement au procédé usuel stochastique fondé sur une probabilité de consommation, nous faisons ce choix d'une manière déterministe en calculant le flux réactif $\varphi$ en fonction de la concentration à la paroi $c_w$.

$$\varphi = \kappa\left(c_w - c^*\right)$$

Après chaque pas de temps, les moments sont calculés à partir des coordonnées $r_n$ des particules :

$$m_i(t) = \sum_n r_n^i$$

Aux temps longs, les moments tendent vers des asymptotes linéaires, dont les pentes sont égales aux valeurs asymptotiques des coefficients macroscopiques recherchés.

La méthode par marche aléatoire proposée est un procédé robuste puisqu'il repose sur des lois physiques simples et bien connues. En outre, cette méthode peut être aisément appliquée aux géométries pour lesquelles aucune solution analytique n'existe.

Cependant, son principal inconvénient réside dans son besoin important en temps CPU. Aussi, afin de réduire le nombre de particules mises en jeu sans rogner sur la précision des résultats, on peut, selon un autre mode de réalisation, réinjecter les particules consommées sans perturber le profil de concentration. En pratique, il suffit de dupliquer le nombre de particules quand cinquante pourcents des particules initiales ont déjà réagi à la paroi.

Selon un autre mode de réalisation, ces calculs de moments spatiaux du soluté sont effectués lors d'une étape préliminaire, une seule fois pour chaque géométrie. A l'échelle du pore, les coefficients de proportionnalité de transport $\bar{v}'$, $\overline{D}'$ et $\bar{\gamma}$ ne dépendent que de la géométrie et du nombre de Péclet-Damköhler. Ce nombre est noté PeDa. Pour chaque géométrie, ils peuvent donc être exprimés une fois pour toute en fonction de PeDa. Ces lois sont ensuite communiquées au modèle de réseau PNM en tant que données d'entrée. Il suffit ensuite au cours de la simulation, de calculer PeDa pour obtenir les coefficients de proportionnalité et être à même de résoudre le transport réactif. Ces correctifs sont déterminés physiquement, une fois, à l'aide des moments spatiaux du soluté.

Pour explorer l'ensemble des régimes réactifs, la méthode précédente doit être répétée plusieurs fois (un point par nombre de Péclet-Damköhler). Dans un second temps et dans le but de faciliter l'implémentation de ces lois dans le modèle du réseau de pores, les coefficients de proportionnalité de transport sont exprimés à l'aide de fonctions analytiques dont la formulation générique est la suivante :

$$f\left(PeDa\right) = 1 + \frac{a}{\left(1 + \frac{b}{\left(PeDa\right)^{\alpha}}\right)^{\beta}} \qquad \text{où} \quad f = \bar{\gamma}' \; ou \; \bar{v}' \; ou \; \overline{D}'$$

Le paramètre a décrit le comportement du coefficient de proportionnalité aux PeDa élevés, i.e. quand le transport diffusif vers la paroi est limitant au regard de la cinétique intrinsèque de la réaction. Le premier terme de la somme reflète quant à lui le comportement aux PeDa faibles, i.e. quand la réaction de surface limite la cinétique. Tendant dans ce cas vers les conditions du transport classique, ce terme est égal à 1.

$$\lim_{PeDa \to 0} f = 1 \quad \text{et} \quad a = \lim_{PeDa \to \infty} f - 1$$

Le paramètre b est associé au nombre de Péclet-Damköhler critique $PeDa_c$ qui sépare les deux comportements préalablement évoqués. La rapidité de transition entre ces deux régimes est contrôlée par les exposants $\alpha$ et $\beta$. Le premier contrôle la pente au voisinage de $PeDa_c$ tandis que le second gouverne la courbure.

La longueur caractéristique impliquée dans le nombre de Péclet-Damköhler est égale au rayon inscrit du tube capillaire :

$$PeDa = \frac{\kappa R}{D}$$

où $\kappa$ est la vitesse intrinsèque de réaction,
R est le rayon inscrit du capillaire,
D est le coefficient de diffusion moléculaire.

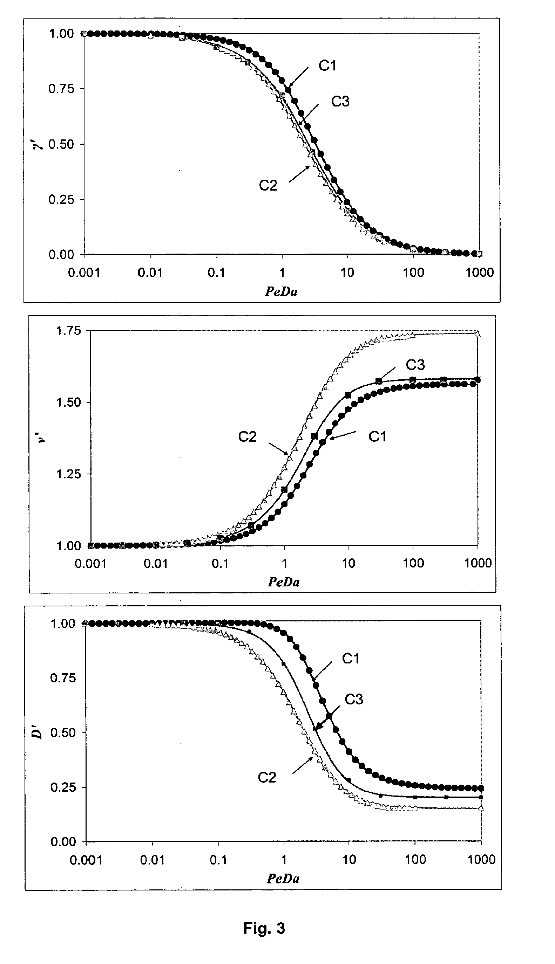

Ci-dessous nous donnons les valeurs des paramètres de la fonction servant à exprimer les coefficients de proportionnalité de transport pour trois géométries : le cylindre à base circulaire (C1), à base triangulaire équilatérale (C2), et à base elliptique (C3) dont le ratio entre le grand et petit axe vaut 2. Les représentations graphiques de ces fonctions sont rassemblées au sein de la figure 3.

|  |  | *a* | *b* | α | β |
|---|---|---|---|---|---|
| **C1** | $\bar{\gamma}$ | -1.00 | 2.92 | 1.02 | 1.13 |
|  | $\bar{v}'$ | 0.56 | 3.67 | 1.22 | 0.88 |
|  | $\overline{D}'$ | -0.76 | 1.64 | 1.26 | 2.98 |
| **C2** | $\bar{\gamma}$ | -1.00 | 3.14 | 1.02 | 0.81 |
|  | $\bar{v}'$ | 0.74 | 2.59 | 1.19 | 0.78 |
|  | $\overline{D}'$ | -0.85 | 3.48 | 1.40 | 0.66 |
| **C3** | $\bar{\gamma}$ | -1.00 | 3.92 | 1.05 | 0.78 |
|  | $\bar{v}'$ | 0.58 | 5.06 | 1.47 | 0.61 |
|  | $\overline{D}'$ | -0.80 | 5.63 | 1.64 | 0.78 |

c. Résolution de l'équation du transport réactif à l'échelle du pore

Une fois ces coefficients déterminés, on peut résoudre numériquement le champ de concentration $\bar{c}$ à l'échelle du pore. On peut effectuer un parallèle avec la résolution du champ de pression à partir des conductances hydrauliques des éléments constitutifs du réseau déduites de la loi de Poiseuille. On cherche précisément la solution asymptotique du système pour laquelle le champ de concentration relaxe uniformément vers l'équilibre en absence de perturbations extérieures (réseau périodique).

Cette tâche a un enjeu primordial puisque de sa précision découle en partie celle de toutes les autres. Au sein de l'approche réseau de pores, l'information de l'échelle du pore est implicitement prise en compte via des paramètres effectifs : les conductances hydrauliques pour l'écoulement et les coefficients de proportionnalité pour le transport réactif. Ces paramètres sont calculés pour chaque cellule-unité du réseau PNM. Les données requises sont la forme de la section et le nombre de Péclet-Damköhler. Alors, à l'aide de la fonction *f* présentée dans l'étape précédente, les coefficients de proportionnalité sont directement (et physiquement) obtenus. Quant aux conductances hydrauliques, elles sont estimées selon la loi de Poiseuille.

L'étape suivante consiste alors à déterminer le profil de concentration moyen entre deux pores. Pour cela, on résout analytiquement l'équation macroscopique de transport à l'échelle du réseau de pore, qui est une équation différentielle du second ordre en régime asymptotique :

$$\frac{\partial \overline{c}}{\partial t} + \nabla \cdot \left( \overline{v}' \, \overline{\mathbf{v}} \, \overline{c} - \overline{D}' \, \overline{\mathbf{D}} \cdot \nabla \overline{c} \right) + \overline{\gamma}' \, \overline{\gamma} \cdot \left( \overline{c} - c^* \right) = 0$$

Les conditions aux limites de ce système sont les concentrations de chaque pore du réseau. La concentration au noeud est numériquement déterminée en écrivant la conservation de la masse : la somme des flux nets entrants doit être égale à zéro. L'expression de ces flux est déduite du profil de concentration résolu entre deux noeuds. De cette manière, les flux de matière sont calculés en considérant les termes convectifs et dispersifs en même temps. Ceci permet d'estimer les flux avec une précision inégalée par les techniques usuelles telles que le schéma amont pour la convection ou l'approximation linéaire pour la diffusion.

d. Déterminations des coefficients de proportionnalité du transport à l'échelle de la maille du modèle de réservoir

Cette étape consiste à déterminer coefficients de proportionnalité de transport, $\overline{\overline{v}}'$, $\overline{\overline{D}}'$ et $\overline{\overline{\gamma}}'$, à l'échelle du réseau de pore, c'est-à-dire à l'échelle de la maille du modèle de réservoir (un modèle PNM par maille). Ces coefficients sont utilisés par le simulateur d'écoulement réactif (SER) pour déterminer les concentrations dans chaque maille du modèle de réservoir. Pour ce faire, on utilise une technique d'homogénéisation.

Aux temps longs (régime asymptotique), ces coefficients sont indépendants du temps. Ils dépendent du type de roche (topologie, géométrie), appelé « rock type » et noté RT, et des régimes d'écoulements réactifs (nombres de Péclet et Péclet-Damköhler).

Comme pour l'étape b, les valeurs asymptotiques des coefficients de proportionnalité sont déterminées à l'aide des trois premiers moments spatiaux du soluté. Ceux du réseau de pore, notés $\mathbf{M}_i$, sont calculés à partir des moments

$\mathbf{m}_i$ de chaque cellule-unité du modèle PNM, selon les formules suivantes :

$$M_0 = \int_{net} c\,dr^3 = \sum_n m_0(n)$$

$$\mathbf{M}_1 = \int_{net} c\mathbf{R}\,dr^3 = \sum_n m_0(n)\cdot\overline{\mathbf{R}}_n + \sum_n \mathbf{m}_1(n)$$

$$\mathbf{M}_2 = \int_{net} c\mathbf{R}^2\,dr^3 = \sum_n m_0(n)\cdot\overline{\mathbf{R}}_n^2 + 2\sum_n sym\left(\overline{\mathbf{R}}_n\mathbf{m}_1(n)\right) + \sum_n \mathbf{m}_2(n)$$

avec $\mathbf{R}$ la position macroscopique.telle que :

$$\mathbf{R} = \overline{\mathbf{R}}_n + \mathbf{r}$$

où $\overline{\mathbf{R}}_n$ est la position dans le référentiel du réseau du centre de la cellule-unité et
$\mathbf{r}$ est la position locale au sein de la cellule-unité.

Les moments $\mathbf{m}_i$ sont obtenus analytiquement en intégrant le profil longitudinal de concentration entre deux noeuds ($z$ étant la longueur mesurée à partir d'un noeud), comme évoqué à l'étape précédente.

$$\mathbf{m}_i(t) = \int \overline{c}(z,t)z^i \, \mathrm{d}z$$

Après avoir normalisé les coefficients macroscopiques $\overline{\overline{v}}$, $\overline{\overline{D}}'$ et $\overline{\overline{\gamma}}$ par la vitesse de réaction apparente obtenue dans le cas d'un mélange parfait, la vitesse moyenne interstitielle et le coefficient de diffusion moléculaire, respectivement, nous obtenons les expressions suivantes pour les coefficients de proportionnalité de transport :

$$\overline{\overline{\gamma}}' = \frac{\overline{\overline{\gamma}}^*}{\overline{\overline{\gamma}}} = \frac{1}{M_0}\sum_n m_0(n)\cdot\frac{\overline{\sigma}_n}{\overline{\overline{\sigma}}}\cdot\overline{\gamma}'_n$$

$$\overline{\overline{v}}' = \frac{1}{M_0}\sum_n m_0(n)\overline{v}'_n \; \frac{\overline{\mathbf{v}}_n}{\overline{\overline{v}}} \; - \; \frac{\overline{\overline{\sigma}}}{M_0}\frac{\overline{PeDa}}{\overline{Pe}}\cdot\sum_n^N\left(\overline{\gamma}'_n\cdot\frac{\overline{\sigma}_n}{\overline{\overline{\sigma}}} - \overline{\overline{\gamma}}'\right)\left(m_0(n)\overline{\mathbf{R}}_n + \mathbf{m}_1(n)\right)$$

$$\overline{\overline{\mathbf{D}}}' = \frac{1}{M_0}\sum_n m_0(n)\overline{\mathbf{D}}'_n \; + \frac{1}{M_0}\frac{\overline{Pe}}{l}\sum_n sym\left(\left(\overline{v}'_n\cdot\frac{\overline{\mathbf{v}}_n}{\overline{\overline{v}}} - \overline{\overline{\mathbf{v}}}'\right)\left(m_0(n)\overline{\mathbf{R}}_n + \mathbf{m}_1(n)\right)\right)$$

$$-\frac{1}{2M_0}\frac{\overline{\overline{\sigma}}\cdot\overline{PeDa}}{l}\sum_n\left(\overline{\gamma}_n'\cdot\frac{\overline{\sigma}_n}{\overline{\overline{\sigma}}}-\overline{\overline{\gamma}}'\right)\left(m_0(n)\overline{\mathbf{R}}_n^2+2sym(\overline{\mathbf{R}}_n\mathbf{m}_1(n))+\mathbf{m}_2(n)\right)$$

avec

$$\overline{\overline{\gamma}}=\kappa\overline{\overline{\sigma}}\quad\text{et}\quad\overline{\gamma}_n=\kappa\overline{\sigma}_n$$

$$2\cdot sym(\mathbf{AB})=\mathbf{AB}+\mathbf{BA}$$
.

où σ est la surface spécifique réactive,
$l$ est une longueur caractéristique du transport
$\overline{Pe}$ est le nombre de Péclet, qui décrit le régime d'écoulement,
$\overline{PeDa}$ est le nombre de Péclet-Damköhler qui gouverne le régime réactif.

$$\overline{Pe}=\frac{\overline{v}\cdot l}{D}\qquad\text{et}\qquad\overline{PeDa}=\frac{\kappa d}{D}$$

Le nombre de Péclet (*Pe*) compare les temps caractéristiques diffusif et convectif, tandis que le nombre de Péclet-Damköhler (*PeDa*) est le ratio entre les temps caractéristiques de diffusion et de réaction. Le rôle détaillé de ces nombres est expliqué dans le papier suivant :

BEKRI S., THOVERT J.F. et ADLER P.M., Dissolution of porous media, Chemical Engineering Science, 1995, 50, n° 17, p. 2765-2791

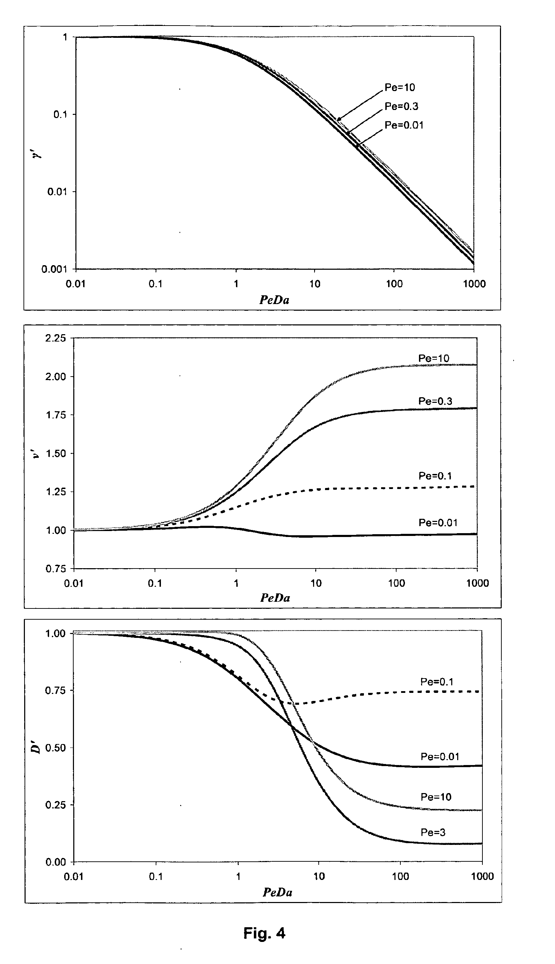

Pour chaque type de roche (*RT*), ces formules peuvent être évaluées numériquement à l'aide du modèle réseau de pores PNM et, éventuellement, exprimées à l'aide de fonctions analytiques comme celle décrite à l'étape b. Elles sont ensuite intégrées au simulateur d'écoulement réactif (*SER*) pour améliorer la représentativité et la prédictibilité des simulations effectuées à cette échelle (figure 2b).
Pour illustration, nous avons tracé sur la figure 4 les trois coefficients de proportionnalité de transport en fonction de *PeDa* pour différents écoulements. Ces courbes ont été obtenues pour une distribution de taille de pores uniforme. On constate par exemple, que lorsque l'écoulement est lent, la vitesse moyenne du soluté est environ deux fois plus importante que celle du fluide dans le cas où la réaction est intense, et que la dispersion est alors quatre fois plus faible. Ceci souligne l'importance d'évaluer précisément et physiquement les coefficients de proportionnalité pour avoir des simulations fiables.

Modifications structurales et évolution des propriétés pétrophysiques (K-Φ).

Dans le cadre du transport réactif, la précision de l'évolution d'une propriété dépend de deux facteurs :

- le premier, extrinsèque, est la connaissance du déséquilibre chimique à l'origine de cette évolution. Une meilleure simulation du transport des espèces chimiques générant ce déséquilibre peut bouleverser le scénario attendu. Ainsi la zone impactée par le fluide réactif est plus grande que prévue si la vitesse moyenne du soluté s'avère supérieure aux estimations classiques.

- le second, intrinsèque, est la prédiction de l'évolution de cette propriété causée par une quantité de déséquilibre donnée. Elle dépend de la bonne prise en compte des effets de structure et des spécificités locales. Par exemple, pour un même déséquilibre moyen, on sait que le phénomène de dissolution et ou de précipitation sera plus intense dans les restrictions entre pores que dans le corps du pore.

Partant de ce constat, on améliore les simulations en agissant sur ces deux axes. On remplace les relations empiriques initialement introduites pour, d'une part, approcher les spécificités du transport réactif, et d'autre part, estimer une variation de perméabilité à partir d'une variation de porosité, par des relations basées sur la physique des écoulements réactifs obtenues en utilisant l'approche du réseau de pore.

Ainsi, à partir des concentrations moyennes $\overline{c}$ calculées à l'étape c, on détermine les concentrations à la paroi $c_w$ et le flux de soluté $\varphi$ émis ou consommé. Il peut être aisément démontré que le déséquilibre chimique à la paroi, normalisé par le déséquilibre moyen, est égal à l'efficacité de la réaction $\overline{\gamma}$ de la cellule-unité. En effet, il suffit de comparer l'expression des termes source calculés, soit d'après la description volumique (membre de gauche de l'équation suivante), soit d'après la description surfacique (membre de droite) :

$$\overline{\gamma}^* \left( \overline{c} - c^* \right) \cdot V = \kappa \left( c_w - c^* \right) \cdot S$$

Pour un mélangeur parfait, $\overline{\gamma}^* = \overline{\gamma}$ par définition et, $c_w = \overline{c}$ car le profil de concentration est uniforme au sein d'un pore dans ce cas. Donc $\overline{\gamma} = \kappa \sigma$ avec la surface spécifique $\sigma$ égale à S/V.

D'après la définition de l'efficacité $\overline{\gamma}$, nous avons donc bien :

$$\overline{\gamma}' = \frac{\overline{\gamma}^*}{\overline{\gamma}} = \frac{c_w - c^*}{\overline{c} - c^*}$$

Par conséquent la densité de flux local $\varphi$ peut être exprimée à l'aide du déséquilibre chimique moyen du pore obtenu à l'étape c, de la cinétique $\overline{\gamma}$ calculée par un module géochimique et de l'efficacité $\overline{\gamma}$ déterminée au cours de l'étape b :

$$\varphi = \kappa \left( c_w - c^* \right) = \overline{\gamma} \cdot \overline{\gamma} \cdot \left( \overline{c} - c^* \right)$$

Connaissant la stoechiométrie s de la réaction, la masse molaire M et la densité $\rho$ du minéral, on calcule l'épaisseur de la couche précipitée ou dissoute au cours du pas de temps $\delta t$, et donc, l'évolution du diamètre du pore. L'épaisseur de la couche est fonction du régime d'écoulement réactif.

$$d(t + \delta t) = d(t) + \delta t \cdot s \frac{M}{\rho} \varphi$$

où d et le diamètre du corps du pore ou de sa restriction.

Puis, de cette variation de la distribution de taille de pores, on peut déduire l'évolution des différentes propriétés pétrophysiques dont la porosité et la perméabilité.

Il suffit de faire appel à la technique classique du réseau de pores décrite par exemple dans l'article suivant:

S. Bekri, C. Laroche, O. Vizika, "Pore-network models to calculate transport properties in homogeneous and heterogeneous porous media". XIV International Conference on Computational Methods in Water Resources, 1115-1122, June 23-28, 2002, Delft, The Netherlands.

Ainsi des relations perméabilité/porosité peuvent être obtenues pour de nombreux régimes d'écoulement réactif et types de roche. Il est possible d'approximer ces relations à l'aide de lois puissances ou de fonctions polynomiales. En tant qu'entrées dans un simulateur d'écoulement réactif, elles sont à même de physiquement relier la porosité, calculée par le module géochimique, à la perméabilité.

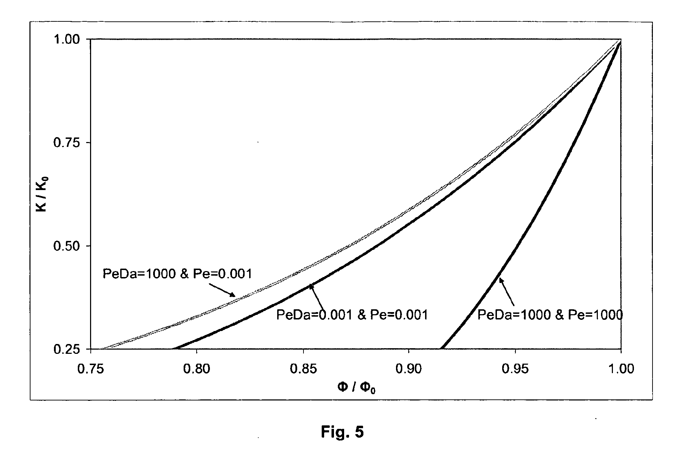

La figure 5 montre des relations perméabilité/porosité obtenues pour trois régimes d'écoulement réactif, caractérisés par des nombres de Péclet et Péclet-Damköphler différents. Ces trois courbes ont été tracées pour un même type de roche : une distribution uniforme de 32 $\mu$m avec un rapport d'aspect égal à 4 et une surface spécifique de 6

$\mu m^1/\mu m^3$. Ceci met en lumière l'impossibilité de décrire correctement le phénomène réactif avec une unique relation empirique par type de roche.

La méthode permet ainsi d'améliorer les prédictions des modifications de propriétés induites par un fluide réactif tel que le $CO_2$ à l'échelle d'un réservoir. On s'intéressera plus particulièrement à l'évolution de la perméabilité mais la méthode peut être appliquée à toute autre propriété.

Résolution de l'équation du transport réactif à l'échelle de la maille du modèle de réservoir

La variation de perméabilité $\delta K$, les coefficients de proportionnalité du transport (*CPT*), et la vitesse apparente moyenne de la réaction ($\bar{\gamma}$) sont fournies au simulateur d'écoulement réactif (*SER*) pour résoudre l'équation de transport. La connaissance de la perméabilité est en effet nécessaire pour déterminer le champ de vitesse à l'itération temporelle suivante. Le résultat est la concentration moyenne $\bar{\bar{c}}$ de l'espèce chimique étudiée. Cette concentration est à son tour utilisée par le module géochimique (*MG*) via le couplage (*CPL*).

La méthode consiste à itérer, selon une boucle temporelle (*BT*), entre ces deux modules et le module PNM. A la fin d'une itération, on obtient en chaque maille du modèle de réservoir la concentration moyenne $\bar{\bar{c}}$, une structure du réseau de pore mise à jour en fonction des précipitations/dissolutions, et une loi K-$\Phi$. Il suffit alors de réitérer avec ce nouvel écoulement autant de fois que désiré.

4. Optimisation de l'injection de $CO_2$ au sein du milieu poreux

La qualité des simulations permettant de déterminer le champ de concentration est précieuse pour prévoir d'éventuelles pertes d'injectivité, des affaiblissements mécaniques, des créations de chemins préférentiels et/ou une remise en cause de l'intégrité de la couverture.

Selon le résultat de ces simulations la décision d'utiliser ou non le réservoir étudié pour stocker du $CO_2$ est prise. Par exemple, si les simulations montrent une forte concentration vers la surface, ceci indique que la couverture ne permet pas de conserver le $CO_2$ dans la structure souterraine.

On évalue aussi les quantités de $CO_2$ pouvant être injectées, ainsi que le débit optimal d'injection. L'exploitation du milieu peut être également modifiée, en réalisant au moins l'une des opérations suivantes :

- réalisation de nouveaux forages : si l'on constate qu'une partie du réservoir n'est pas atteinte par le $CO_2$, on peut forer un puits atteignant cette partie de façon à stocker plus de $CO_2$;

- modification de la pression d'injection : si l'on constate que le $CO_2$ a du mal à migrer au sein du réservoir;

- mise en place de dispositif de remédiation : si l'on constate une fuite (marquée par de forte concentration en dehors du réservoir), on peut mettre en place des systèmes de colmatage ou autres systèmes de remédiation connus des spécialistes;

- ajout d'additifs dans le $CO_2$.... : on peut par exemple ajouter des additifs connus des spécialistes pour faciliter sa migration au sein du réservoir.

**Avantages**

L'invention permet d'augmenter la qualité des simulations d'écoulements réactifs en milieu poreux, ce qui est capital lors des injections de $CO_2$, que ce soit pour son stockage géologique ou pour améliorer la récupération des hydrocarbures.

Comme l'illustrent les figures 2a et 2b, les lois empiriques indépendantes du régime de transport réactif sont remplacées dans l'invention par des lois dépendantes des nombres adimensionnels le gouvernant (*Pe* et *PeDa*). On a toujours le couplage entre transport et géochimie, mais de manière indirecte cette fois-ci, car le transport est fonction du terme source "réel", i.e. tenant compte de la structure et des limitations dues au transfert de masse. Ensuite, la loi reliant la porosité à la perméabilité n'est plus unique, mais fonction de l'écoulement réactif.

L'invention s'attache ainsi à modéliser et simuler les spécificités du transport réactif au moyen d'une approche du réseau de pores, à savoir : modifications de l'équation macroscopique de transport *via* l'ajout de coefficients de proportionnalité adéquats et évolutions des propriétés pétrophysiques en raison des modifications structurales induites.

**Revendications**

1. Méthode pour optimiser une injection d'un fluide au sein d'un milieu poreux comportant un réseau de pores, dans laquelle on acquiert des données relatives audit milieu poreux et audit fluide, on construit une discrétisation dudit milieu poreux en un ensemble de mailles, et dans laquelle on modélise, au moyen d'un ordinateur, une migration dudit fluide au sein dudit milieu poreux en déterminant en chaque maille une concentration d'une espèce chimique intervenant dans une réaction chimique entre ledit fluide et ledit milieu, en résolvant une équation de transport réactif à l'échelle d'une maille, **caractérisé en ce que** :

   - on détermine en chaque maille la concentration de ladite espèce chimique en résolvant, au moyen de logiciels, ladite équation en tenant compte de modifications de concentrations de ladite espèce chimique à l'échelle des pores, au moyen d'une représentation du réseau de pores pour chaque maille par un modèle PNM; et
   - on optimise l'injection dudit fluide au sein du milieu poreux, en fonction desdites concentrations en chaque maille.

2. Méthode selon la revendication 1, dans laquelle on tient compte des modifications de concentrations à l'échelle des pores en modifiant structurellement ledit modèle PNM en chaque maille.

3. Méthode selon l'une des revendications précédentes, dans laquelle on résout ladite équation en réalisant les étapes suivantes:

   i. on construit une représentation du réseau de pores pour chaque maille, au moyen d'un modèle PNM comportant un ensemble de noeuds de géométrie connue reliés par des canaux de géométrie connue ;
   ii. on définit ladite équation de transport réactif à l'échelle d'une maille en reliant ladite concentration $\bar{\bar{c}}$ à trois paramètres, une vitesse moyenne de ladite espèce $\bar{v}$, un tenseur dispersif moyen de ladite espèce $\bar{\bar{D}}$ et une vitesse apparente de réaction moyenne sur une maille $\bar{\gamma}$, chacun desdits paramètres étant pondéré par un coefficient de proportionnalité du transport à l'échelle d'une maille $\bar{\bar{v}}'$, $\bar{\bar{D}}'$ et $\bar{\bar{\gamma}}'$;
   iii. on détermine lesdits coefficients $\bar{\bar{v}}'$, $\bar{\bar{D}}'$ *et* $\bar{\bar{\gamma}}$ au moyen dudit modèle PNM ;
   iv. on prend en compte des modifications structurales dudit réseau de pore engendrées par réaction chimique, en modifiant ledit modèle PNM et en déduisant de ce modèle PNM modifié des propriétés pétrophysiques ;
   v. on résout ladite équation à partir desdits coefficients $\bar{\bar{v}}'$, $\bar{\bar{D}}'$ et $\bar{\bar{\gamma}}$, desdites propriétés pétrophysiques, et de mesures relatives audit milieu et audit fluide.

4. Méthode selon la revendication 3, dans laquelle on détermine les coefficients de proportionnalité à l'échelle d'une maille $\bar{\bar{v}}'$, $\bar{\bar{D}}'$ et $\bar{\bar{\gamma}}$, en réalisant les étapes suivantes :

   a. on détermine des coefficients de proportionnalité du transport à l'échelle du pore $\bar{v}'$, $\bar{D}'$ et $\bar{\gamma}$, en chaque canal et noeud dudit modèle PNM ;
   b. on détermine une concentration de ladite espèce en chaque canal et noeud dudit modèle PNM, en résolvant une équation du transport réactif à l'échelle du pore, à partir desdits coefficients de proportionnalité du transport à l'échelle du pore $\bar{v}'$, $\bar{D}'$ et $\bar{\gamma}$ ;
   c. on déduit des résultats des étapes a et b, lesdits coefficients de proportionnalité du transport à l'échelle de la maille $\bar{\bar{v}}'$, $\bar{\bar{D}}'$ et $\bar{\bar{\gamma}}$ par une méthode d'homogénéisation.

5. Méthode selon l'une des revendications 3 à 4, dans laquelle l'équation de transport réactif à l'échelle d'une maille s'écrit :

$$\frac{\partial \bar{\bar{c}}}{\partial t} + \nabla \cdot \left( \bar{\bar{v}}' \bar{\bar{\mathbf{v}}} \cdot \bar{\bar{c}} - \bar{\bar{D}}' \bar{\bar{\mathbf{D}}} \cdot \nabla \bar{\bar{c}} \right) + \bar{\bar{\gamma}}' \bar{\bar{\gamma}} \cdot \left( \bar{\bar{c}} - c^\bullet \right) = 0$$

où $c^*$ est une concentration d'équilibre de ladite espèce.

6. Méthode selon l'une des revendications 3 à 5, dans laquelle les coefficients de proportionnalité du transport à l'échelle du pore $\bar{v}'$, $\bar{D}'$ et $\bar{\gamma}$ sont définis en fonction des moments spatiaux de ladite espèce.

7. Méthode selon la revendication 6, dans laquelle ont détermine les coefficients de proportionnalité du transport à l'échelle du pore $\overline{v}'$, $\overline{D}'$ et $\overline{\gamma}$ en déterminant les moments spatiaux de ladite espèce au moyen d'une technique des moments ou d'une technique de marches aléatoires.

8. Méthode selon la revendication 6, dans laquelle les coefficients de proportionnalité du transport à l'échelle du pore $\overline{v}'$, $\overline{D}'$ et $\overline{\gamma}$, sont ainsi définis :

$$f(PeDa) = 1 + \frac{a}{\left(1 + \dfrac{b}{(PeDa)^{\alpha}}\right)^{\beta}} \qquad \text{où} \quad f = \overline{\gamma}' \ ou \ \overline{v}' \ ou \ \overline{D}'$$

et où $PeDa$ est le nombre de Péclet-Damköhler, et $a$, b, $\alpha$ et $\beta$ sont des paramètres définis en fonction de la géométrie du modèle PNM.

9. Méthode selon l'une des revendications 3 à 7, dans laquelle on modifie ledit modèle PNM pour prendre en compte les modifications structurales dudit réseau de pore engendrées par réaction chimique en déterminant une concentration en espèce chimique aux parois de chaque noeud et canal, et en en déduisant une variation de géométrie des noeuds et canaux dudit modèle PNM.

10. Méthode selon l'une des revendications précédentes, dans laquelle les mesures comportent au moins les mesures suivantes :

- des mesures relatives au fluide, telles que : coefficient de diffusion moléculaire, densité et viscosité;
- des mesures relatives au milieu, telles que : perméabilité, porosité, faciès lithologiques, densité et vitesse intrinsèque de réaction.

11. Méthode selon l'une des revendications précédentes, dans laquelle le fluide est du $CO_2$, et on optimise l'injection de $CO_2$ au sein du milieu poreux en réalisant au moins l'une des opérations suivantes :

- on modifie une quantité de $CO_2$ injectée au sein dudit milieu ;
- on modifie un débit d'injection de $CO_2$ ;
- on réalise de nouveaux forages au sein dudit milieu pour injecter ledit $CO_2$ ;
- on met en place au moins un dispositif de remédiation au sein dudit milieu pour remédier à des fuites du $CO_2$ vers la surface ou un acquière ;
- on ajoute des additifs dans le $CO_2$ injecté.

Fig. 1

Fig. 2.a

**Fig. 2.b**

**Fig. 3**

**Fig. 4**

**Fig. 5**

Europäisches
Patentamt

European
Patent Office

Office européen
des brevets

**RAPPORT DE RECHERCHE EUROPEENNE**

Numéro de la demande

EP 10 29 0498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 795 699 A1 (INST FRANCAIS DU PETROLE [FR]) 13 juin 2007 (2007-06-13) * le document en entier * ----- | 1-11 | INV. G06F17/50 |
| Y | L. ALGIVE, S. BEGRI, M. ROBIN, O. VIZIKA: "REACTIVE TRANSPORT : EXPERIMENTS AND PORE-NETWORK MODELLING", , SCA2007-, 12 septembre 2007 (2007-09-12), pages 1/13-13/13, XP002584647, Extrait de l'Internet: URL:http://www.scaweb.org/assets/papers/2007_papers/10.pdf [extrait le 2010-05-05] * le document en entier * ----- | 1-11 | |

DOMAINES TECHNIQUES
RECHERCHES (IPC)

G06F

Le présent rapport a été établi pour toutes les revendications

| Lieu de la recherche | Date d'achèvement de la recherche | Examinateur |
|---|---|---|
| Munich | 16 novembre 2010 | Lerbinger, Klaus |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................................
& : membre de la même famille, document correspondant

EPO FORM 1503 03.82 (P04C02)

**EP 2 315 144 A1**

**ANNEXE AU RAPPORT DE RECHERCHE EUROPEENNE
RELATIF A LA DEMANDE DE BREVET EUROPEEN NO.**

EP 10 29 0498

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-11-2010

| Document brevet cité au rapport de recherche | | Date de publication | Membre(s) de la famille de brevet(s) | | Date de publication |
|---|---|---|---|---|---|
| EP 1795699 | A1 | 13-06-2007 | CA | 2570111 A1 | 12-06-2007 |
| | | | FR | 2894672 A1 | 15-06-2007 |
| | | | US | 2007143024 A1 | 21-06-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **Shapiro M. ; Brenner H.** Dispersion of a chemically reactive solute in a spatially model of a porous medium. *Chemical Engineering Science,* 1988, vol. 43, 551-571
- **Le Gallo, Y. et al.** Long-term flow simulation of CO2 storage in saline aquifer. *Proceedings of the 8th Conference on GreenHouse Gas Technologies,* 2006
- **Trenty, L. et al.** A sequential splitting strategy for CO2 storage modelling. *Proceedings of 10th European Conference on the Mathematics of Oil Recovery,* 2006
- **Laroche, C. ; Vizika, O.** Two-phase flow properties prediction from small-scale data using pore-network modeling. *Transport in Porous Media,* 2005, vol. 61 (1), 77-91
- **Shapiro M. ; Brenner H.** Taylor dispersion of chemically reactive species: irreversible first-order reactions in bulk and on boundaries. *Chemical Engineering Science,* 1986, vol. 41 (6), 1417-1433
- **BEKRI S. ; THOVERT J.F. ; ADLER P.M.** Dissolution of porous media. *Chemical Engineering Science,* 1995, vol. 50 (17), 2765-2791
- **S. Bekri ; C. Laroche ; O. Vizika.** Pore-network models to calculate transport properties in homogeneous and heterogeneous porous media. *XIV International Conference on Computational Methods in Water Resources,* 23 Juin 2002, 1115-1122